# EUROPEAN PATENT APPLICATION

(11) **EP 4 715 390 A1**
(43) Date of publication of application: **25.03.2026**
(21) Application number: 24806856.1
(22) Date of filing: 22.03.2024
(51) Int. Cl.: G01N 35/10

(54) **AUTOMATIC ANALYSIS DEVICE**

(30) Priority: 15.05.2023 JP 2023080099
(71) Applicant: HITACHI HIGH-TECH CORPORATION, Tokyo 105-6409 (JP)
(72) Inventor: KITAGAWA Fumihito, Tokyo 105-6409 (JP); TAKAHASHI Takuya, Tokyo 105-6409 (JP); KABE Yoshihiro, Tokyo 105-6409 (JP)
(74) Representative: MERH-IP Matias Erny Reichl Hoffmann Patentanwälte PartG mbB
(86) International application number: PCT/JP2024/011402
(87) International publication number: WO 2024/236901

(57) **Abstract**

Provided is an automatic analyzer including: a vacuum bottle configured to receive a cleaner used in a cleaning mechanism; a vacuum tank connected to the vacuum bottle; a vacuum pump configured to evacuate the vacuum tank; and a cylindrical aspiration nozzle configured to discharge the used cleaner aspirated from the cleaning mechanism into the vacuum bottle, in which the aspiration nozzle vertically extends in the vacuum bottle, has a lower end surface that faces downward and is blocked with an end wall, and includes a discharge port that is formed sideways.

## Description

### Technical Field

The present invention relates to an automatic analyzer including a vacuum bottle.

### Background Art

In an automatic analyzer where a liquid sample such as blood or urine is used as a specimen, a configuration where a waste liquid (for example, a cleaner) may be vacuum-aspirated through a vacuum bottle to collect the waste liquid in the vacuum bottle may be adopted. When the waste liquid vigorously flows into the vacuum bottle, the waste liquid is scattered in the vacuum bottle, and the scattered waste liquid may be aspirated into a vacuum tank. When a certain amount of waste liquid is accumulated in the vacuum tank, the vacuum aspiration needs to be stopped to discharge the waste liquid from the vacuum tank. However, since a long period of time is required to obtain a vacuum state again, the stop frequency of the vacuum aspiration is desirably as low as possible from the viewpoint of improving the operating rate of the automatic analyzer. In order to suppress the inflow of the waste liquid into the vacuum tank, a configuration where the inflow of the waste liquid into the vacuum tank is suppressed using a divider provided in the vacuum bottle, and a configuration where a flow speed of the waste liquid jetted into the vacuum bottle is decreased by providing a diaphragm in a nozzle for introducing the waste liquid into the vacuum tank are disclosed (PTL 1).

### Citation List

### Patent Literature

PTL 1: JP2019-501127A

### Summary of Invention

### Technical Problem

In the automatic analyzer, from the viewpoint of ensuring the reliability of a measurement result, it is important to clean a probe or the like used for aliquoting a reagent or a specimen to cleanly maintain the probe. A cleaner attached to the probe during cleaning is removed from the nozzle by vacuum aspiration, is temporarily accumulated in the vacuum bottle, and is subsequently discharged.

Recently, the processing capacity required for the automatic analyzer has been increasing, a cleaning area or the number of times of cleaning of the probe increases, and the amount of the cleaner used per unit time and further the amount of waste liquid also tend to increase. Therefore, a large amount of waste liquid is vigorously introduced into the vacuum bottle, the waste liquid is more likely to be scattered in the vacuum bottle, and thus a measure such as enlargement of the vacuum bottle may be taken to suppress the inflow of the scattered waste liquid into the vacuum tank. However, in order to provide the automatic analyzer in a limited space in a laboratory, miniaturization is required for the automatic analyzer, and the enlargement of the vacuum bottle is not desirable from the viewpoint of promoting the miniaturization of the automatic analyzer. Accordingly, means for suppressing the inflow of the waste liquid increased along with the improvement of the processing capacity from the vacuum bottle into the vacuum tank without inhibiting the miniaturization of the automatic analyzer is required.

In the configuration disclosed in PTL 1 where the inside of the vacuum bottle is separated by the divider, the storage volume of the waste liquid in the vacuum bottle decreases, and an increase in the amount of waste liquid cannot be sufficiently handled. In order to sufficiently ensure the storage volume of the waste liquid, the vacuum tank is enlarged as a whole, which is contrary to the request for the miniaturization of the automatic analyzer. In addition, even in the configuration disclosed in PTL 1 where the diaphragm is provided in the nozzle, an increase in the amount of waste liquid cannot be sufficiently handled.

An object of the present invention is to provide an automatic analyzer capable of suppressing inflow of a waste liquid from a vacuum bottle into a vacuum tank and suppressing enlargement of the vacuum bottle at the same time when the amount of the waste liquid increases.

### Solution to Problem

In order to achieve the above-described object, according to the present invention, there is provided an automatic analyzer including: a vacuum bottle configured to receive a cleaner used in a cleaning mechanism; a vacuum tank connected to the vacuum bottle; a vacuum pump configured to evacuate the vacuum tank; and a cylindrical aspiration nozzle configured to discharge the used cleaner aspirated from the cleaning mechanism into the vacuum bottle, in which the aspiration nozzle vertically extends in the vacuum bottle, has a lower end surface that faces downward and is blocked with an end wall, and includes a discharge port that is formed sideways.

### Advantageous Effects of Invention

According to the present invention, it is possible to suppress inflow of a waste liquid from a vacuum bottle into a vacuum tank and to suppress enlargement of the vacuum bottle at the same time when the amount of the waste liquid increases.

### Brief Description of Drawings

[Fig. 1] Fig. 1 is an overall configuration diagram illustrating an automatic analyzer according to a first embodiment of the present invention.
[Fig. 2] Fig. 2 is a diagram illustrating a cleaning operation of a reagent probe after aliquoting a reagent.
[Fig. 3] Fig. 3 is a diagram illustrating an aspiration operation of a cleaner attached to the reagent probe.
[Fig. 4] Fig. 4 is a schematic diagram illustrating an aspiration mechanism that executes a liquid aspiration operation of the cleaner.
[Fig. 5] Fig. 5 is a table collectively illustrating the summary of an aspiration control operation of a cleaner (waste liquid) by a control device.
[Fig. 6] Fig. 6 is a perspective view illustrating the external appearance of a vacuum bottle.
[Fig. 7] Fig. 7 is a top view illustrating the external appearance of the vacuum bottle.
[Fig. 8] Fig. 8 is a cross-sectional view taken along line A-A in Fig. 7.
[Fig. 9] Fig. 9 is a cross-sectional view taken along line B-B in Fig. 7.
[Fig. 10] Fig. 10 is a cross-sectional view taken along line B-B in Fig. 7.
[Fig. 11] Fig. 11 is a top view illustrating the external appearance of a vacuum bottle in an automatic analyzer according to a second embodiment of the present invention.
[Fig. 12] Fig. 12 is a perspective view illustrating the external appearance of a vacuum bottle in an automatic analyzer according to a third embodiment of the present invention.
[Fig. 13] Fig. 13 is a perspective view illustrating the external appearance of a vacuum bottle according to Comparative Example.

### Description of Embodiments

Hereinafter, embodiments of the present invention will be described with reference to the drawings.

### (First Embodiment)

### -Automatic Analyzer-

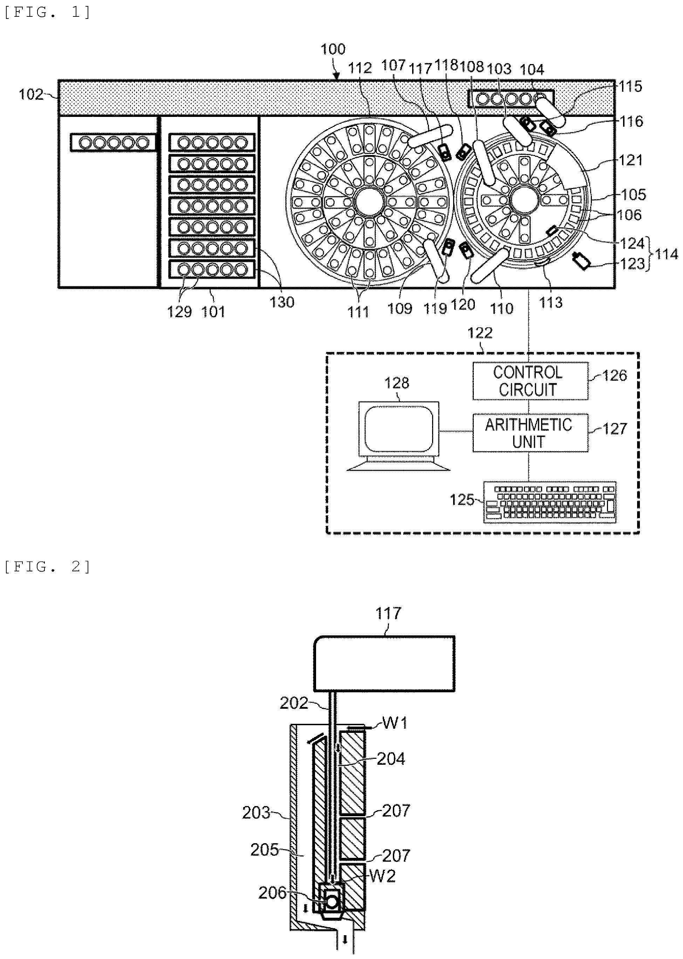

Fig. 1 is an overall configuration diagram illustrating an automatic analyzer according to a first embodiment of the present invention. The automatic analyzer illustrated in the same drawing is a device for analyzing a component in a specimen that is a liquid sample such as blood or urine, and includes an apparatus main body 100 that is a mechanism unit for executing an analysis operation and a control device 122 that controls the apparatus main body 100. The apparatus main body 100 includes a specimen loading port 101, a transport line 102, specimen aliquoting mechanisms 103 and 104, a reaction disk 105, reagent aliquoting mechanisms 107 to 110, a stirring mechanism 113, a photometric mechanism 114, specimen probe cleaning mechanisms 115 and 116, reagent probe cleaning mechanisms 117 to 120, and a reaction container cleaning mechanism 121. Each of the specimen probe cleaning mechanisms 115 and 116, the reagent probe cleaning mechanisms 117 to 120, and the reaction container cleaning mechanism 121 is a device that cleans a probe (specimen probe or reagent probe) or a reaction container 106 with a cleaner.

A plurality of reaction containers 106 for executing a chemical reaction are mounted on the reaction disk 105 in a circumferential pattern. Reagent bottles 111 each of which stores a reagent are mounted in a circumferential pattern on a reagent disk 112. The photometric mechanism 114 includes a light source 123 and a detector 124. The specimen probe cleaning mechanisms 115 and 116 are provided in operating ranges of the specimen aliquoting mechanisms 103 and 104. The reagent probe cleaning mechanisms 117 to 120 are provided in operating ranges of the reagent aliquoting mechanisms 107 to 110.

The control device 122 includes an input unit 125 such as a voice input device of a microphone or the like or a keyboard through which an operator inputs measurement items or measurement conditions, a control circuit 126 that controls an operation of the automatic analyzer in response to an input through the input unit 125, an arithmetic unit 127 as a computer that calculates photometry data obtained by the photometric mechanism 114, and an output unit 128 such as a monitor that outputs a graphical user interface (GUI) or the like displaying an operation content or an analysis result.

In the automatic analyzer illustrated in FIG. 1, the analysis operation is mainly executed as follows. First, a rack 130 that can store specimen containers 129 (blood collection tubes or the like) containing a specimen used for analysis in a standing position is stored in the specimen loading port 101 by the operator. In addition, when the operator inputs a measurement content through the input unit 125, an operation instruction is given from the control device 122 to the apparatus main body 100, and the apparatus main body 100 executes the following analysis operation in accordance with the operation instruction from the control device 122.

First, the rack 130 that is stored in the specimen loading port 101 is automatically transported to the conveyor-like transport line 102. The rack 130 transported to the transport line 102 is placed on a belt of the transport line 102 and transported up to a predetermined specimen aspiration position.

When the rack 130 is transported up to the specimen aspiration position, the specimen aliquoting mechanism 103 (or the specimen aliquoting mechanism 104) is controlled in accordance with the operation instruction from the control device 122, and the specimen aliquoting mechanism 103 moves a specimen probe (not illustrated) from a specimen probe cleaning mechanism 115 to the specimen aspiration position. The specimen aliquoting mechanism 103 lowers the specimen probe at the specimen aspiration position, and stops the specimen probe when contact with the specimen in the specimen container 129 is detected by a liquid level detection sensor (not illustrated). The specimen aliquoting mechanism 103 aspirates a necessary amount of the specimen for analysis into the specimen probe, and vertically lifts the specimen probe in a state where the specimen is held. The specimen aliquoting mechanism 103 moves the specimen probe from the specimen aspiration position to an upper position of a predetermined reaction container 106, and lowers the specimen probe up to the vicinity of a bottom portion of the reaction container 106 to discharge the specimen into the reaction container 106. After aliquoting the specimen into the reaction container 106, the specimen aliquoting mechanism 103 vertically lifts the specimen probe, further moves the specimen probe to the specimen probe cleaning mechanism 115 (or the specimen probe cleaning mechanism 116), and ends the specimen aliquoting operation.

Next, the reaction disk 105 moves the reaction container 106 into which the specimen is aliquoted up to a reagent aliquoting position through a rotation operation.

The reagent aliquoting mechanism 107 or 109 (or the reagent aliquoting mechanism 108 or 110) aspirates a reagent to be used depending on an analysis item from the reagent bottle 111, and discharges the reagent into the reaction container 106 containing the specimen. The reagent aliquoting operation of the reagent aliquoting mechanisms 107 to 110 is substantially the same as the specimen aliquoting mechanism of the specimen aliquoting mechanisms 103 and 104 except for the liquid level detection. After aliquoting the reagent into the reaction container 106, the reagent aliquoting mechanism 107 or 109 moves a reagent probe to the reagent probe cleaning mechanism 117 or 119, and ends the reagent aliquoting operation.

In the present embodiment, the specimen aliquoting mechanism 103, the reagent aliquoting mechanisms 107 and 109, the specimen probe cleaning mechanism 115, and the reagent probe cleaning mechanisms 117 and 119 will be referred to as a first system. The specimen aliquoting mechanism 104, the reagent aliquoting mechanisms 108 and 110, the specimen probe cleaning mechanism 116, and the reagent probe cleaning mechanisms 118 and 120 will be referred to as a second system. The control device 122 controls the apparatus main body 100 such that the specimen aliquoting and reagent aliquoting operations in the first system and the specimen aliquoting and reagent aliquoting operations in the second system are executed in different cycles (for example, alternately), and a high processing capacity of the automatic analyzer is ensured.

After the specimen and the reagent are aliquoted into the reaction container 106, the reaction disk 105 moves the reaction container 106 containing a reaction liquid of the specimen and the reagent to a position of the stirring mechanism 113 through the rotation operation.

The stirring mechanism 113 stirs the reaction liquid in the reaction container 106 to promote the chemical reaction, and changes optical characteristics such as absorbance of the reaction liquid.

After stirring the reaction liquid, the reaction disk 105 causes the reaction container 106 containing the reaction liquid to pass through the photometric mechanism 114 through the rotation operation. When the reaction container 106 passes through the photometric mechanism 114, light from the light source 123 transmits through the reaction liquid and is detected by the detector 124 to measure optical characteristics of the reaction liquid. The data detected by the detector 124 is transmitted to the control device 122, the concentration of the analysis item in the specimen is calculated by the arithmetic unit 127, and the calculation result of the arithmetic unit 127 is output to the output unit 128.

The probe of the specimen aliquoting mechanisms 103 and 104 and the reagent aliquoting mechanisms 107 to 110 or the reaction container 106 used in the above-described analysis operation is cleaned every time by the specimen probe cleaning mechanisms 115 and 116, the reagent probe cleaning mechanisms 117 to 120, and the reaction container cleaning mechanism 121, respectively. As a result, the aliquoting accuracy of the specimen or the reagent is maintained, and the probe or the reaction container 106 is repeatedly used for multiple analysis operations.

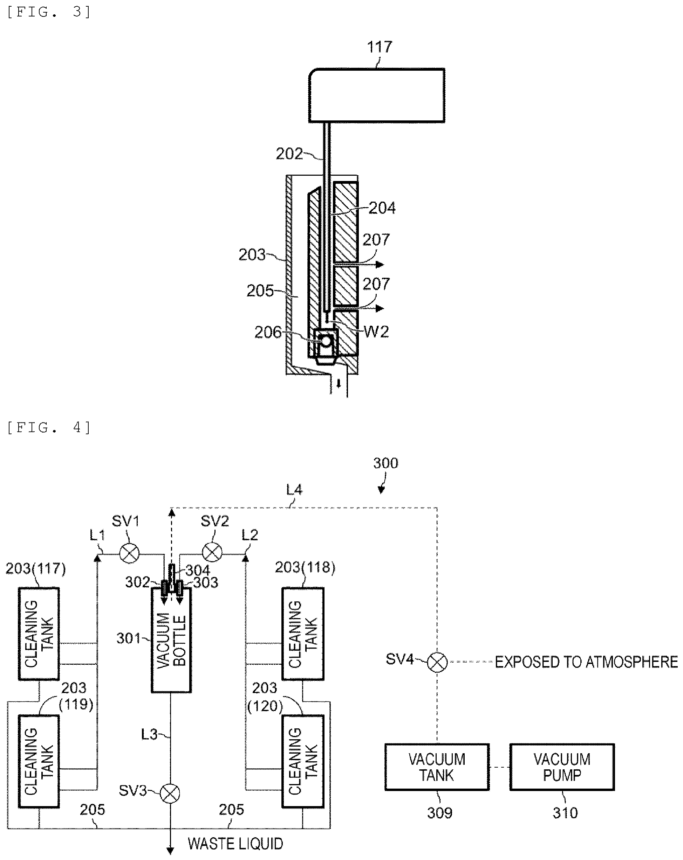

Note that, in order to suppress dilution of the reagent or the specimen, the cleaner attached to the probe or the reaction container 106 during cleaning needs to be sufficiently removed. Accordingly, the automatic analyzer according to the present embodiment includes an aspiration mechanism 300 (FIG. 4) that vacuum-aspirates the cleaner, separately from the cleaning mechanisms (the reagent probe cleaning mechanism 117 and the like) that clean the probe or the reaction container 106 with the cleaner.

### -Factor for Increase of Cleaner-

The control device 122 controls the apparatus main body 100 such that the cleaning operation by the cleaning mechanism and the aspiration removal operation of the cleaner by the aspiration mechanism 300 are executed in parallel. For example, during the cleaning of the probe or the reaction container 106 used in the first system, the cleaner of the probe or the reaction container 106 used in the second system can be removed. Further, the control device 122 can also control the apparatus main body 100 such that not only the cleaning of the probe or the like but also the removal of the cleaner are executed at the same position, for example, to improve the processing capacity. By executing the supply and the aspiration removal of the cleaner using the same cleaning mechanism in a temporally overlapping manner, for example, by aspirating the cleaner from the reagent probe cleaning mechanism 117 using the aspiration mechanism 300 before the cleaning operation of the reagent probe by the reagent probe cleaning mechanism 117 is completed, the processing speed can also be further increased. Note that, in this case, the amount of the cleaner aspirated per hour by the aspiration mechanism 300 increases.

Further, in an automatic analyzer having a configuration where, in order to ensure stability of the reagent, a small notch is formed in a lid of the reagent bottle 111 to insert the reagent probe into the notch, the reagent is attached to the reagent probe during the passage through the notch. Therefore, a cleaning range of the reagent probe is the entire portion where the reagent probe penetrates the lid of the reagent bottle and inserted into the reagent bottle, and the amount of the cleaner increases as compared to a case where the lid of the reagent bottle is opened to set the bottle on the automatic analyzer.

In addition, in the automatic analyzer, in order to improve the processing capacity, an increase in the number of the probes or a reduction in cycle time is promoted. This configuration also contributes to an increase in the amount of the cleaner to be discharged by vacuum aspiration.

### -Probe Cleaning Operation of Cleaning Mechanism-

Fig. 2 is a diagram illustrating the cleaning operation of the reagent probe after aliquoting the reagent. Fig. 2 illustrates the reagent aliquoting mechanism 107 and the reagent probe cleaning mechanism 117. However, the reagent aliquoting mechanisms 108 to 110 and the reagent probe cleaning mechanisms 118 to 120 also have the same configurations or operations as the reagent aliquoting mechanism 107 and the reagent probe cleaning mechanism 117. Each of the reagent aliquoting mechanisms 107 to 110 includes a reagent probe 202. Each of the reagent probe cleaning mechanisms 117 to 120 includes a cleaning tank 203 including a cleaning port 204, a waste liquid tube 205, and a vacuum aspiration port 207.

After completion of the reagent aliquoting, the reagent aliquoting mechanism 107 moves the reagent probe 202 to an upper position of the cleaning tank 203, and lowers the reagent probe 202 toward the cleaning port 204. While or before the reagent probe 202 is inserted into the cleaning port 204, the reagent probe cleaning mechanism 117 starts to discharge external cleaning water W1 (cleaner) from an external cleaning water discharge port of a cleaner supply system (not illustrated) to the cleaning tank 203. The external cleaning water W1 flows down in the cleaning port 204 of the cleaning tank 203, and while the reagent probe 202 is lowering in the cleaning port 204, the entire outer wall surface of the reagent probe 202 is cleaned with the external cleaning water W1 flowing in the cleaning port 204. The external cleaning water W1 (waste liquid) used for cleaning the outer wall surface of the reagent probe 202 flows into the waste liquid tube 205 through the cleaning port 204, and is finally discharged from the cleaning tank 203 through the waste liquid tube 205. In addition, a part of the external cleaning water W1 overflowing from the cleaning port 204 during the cleaning of the reagent probe 202 directly flows into the waste liquid tube 205, and is discharged from the cleaning tank 203.

While or after the reagent probe 202 is introduced or inserted into the cleaning port 204, the reagent probe cleaning mechanism 117 starts to discharge internal cleaning water W2 (cleaner) from the reagent probe 202, and cleans an inner wall surface of the reagent probe 202. The internal cleaning water W2 (waste liquid) used for cleaning the inner wall surface of the reagent probe 202 flows into the waste liquid tube 205 through the cleaning port 204, and is discharged from the cleaning tank 203.

A connection portion of the cleaning port 204 to the waste liquid tube 205 includes a ball valve 206. The ball valve 206 is opened during normal time, and when the cleaning port 204 is depressurized, a ball is aspirated to the cleaning port 204 to block the connection hole of the cleaning port 204 to the waste liquid tube 205. In addition, at least one (in the configuration example of Fig. 2, two) vacuum aspiration port 207 is connected to the cleaning port 204.

### -Cleaner Aspiration Operation of Cleaning Mechanism-

Fig. 3 is a diagram illustrating an aspiration operation of the cleaner attached to the reagent probe 202. The reagent probe cleaning mechanism 117 and the cleaner aspiration mechanism stop the supply of the external cleaning water W1 before the lift of the reagent probe 202 and after the cleaning of the reagent probe 202, and starts the vacuum aspiration of the cleaning port 204 through the vacuum aspiration port 207 while continuing the supply of the internal cleaning water W2. By depressurizing the inside of the cleaning port 204, the ball valve 206 is closed, the connection between the cleaning port 204 and the waste liquid tube 205 is blocked, and the vacuum degree in the cleaning port 204 is maintained. This way, by vacuum-aspirating the cleaning port 204 in a state where the reagent probe 202 is inserted into the cleaning port 204, not only the external cleaning water W1 attached to the outer wall surface of the reagent probe 202 but also the internal cleaning water W2 discharged from the reagent probe 202 are aspirated into the vacuum aspiration port 207, and a large amount of the waste liquid is aspirated into the vacuum aspiration port 207. When the reagent probe 202 is lifted and a tip of the reagent probe 202 is removed from the cleaning port 204, the cleaner aspiration mechanism stops the vacuum aspiration. Along with the stop of the vacuum aspiration, the ball valve 206 is opened. In addition, the reagent probe cleaning mechanism 117 stops the supply of the internal cleaning water W2 while the reagent probe 202 is being lifted in the cleaning port 204.

### -Cleaner Aspiration Mechanism-

Fig. 4 is a schematic diagram illustrating the aspiration mechanism 300 that executes the liquid aspiration operation of the cleaner described above. The aspiration mechanism 300 illustrated in Fig. 4 includes a vacuum bottle 301, aspiration nozzles 302 and 303, a vacuum nozzle 304, a vacuum tank 309, and a vacuum pump 310. Fig. 4 illustrates the aspiration mechanism 300 that aspirates the cleaner from each of the cleaning tanks 203 of the reagent probe cleaning mechanisms 117 to 120. However, the aspiration mechanism that aspirates the cleaner from the specimen probe cleaning mechanisms 115 and 116 and the aspiration mechanism that aspirates the cleaner from the reaction container cleaning mechanism 121 also have the same configuration as the aspiration mechanism 300. The respective aspiration mechanisms that aspirate the cleaner from the reagent probe cleaning mechanisms 117 to 120, specimen probe cleaning mechanisms 115 and 116, and the reaction container cleaning mechanism 121 may be provided independently of each other. For example, a configuration where the vacuum tank 309 and the vacuum pump 310 are shared by a plurality of aspiration mechanisms can also be adopted. In addition, a configuration where one or a plurality of vacuum bottles 301 are shared by a plurality of aspiration mechanisms, for example, the cleaner used for cleaning the specimen probe and the cleaner used for cleaning reagent probe are aspirated into the same vacuum bottle 301 can also be adopted.

The vacuum bottle 301 is a container where the cleaner used by the reagent probe cleaning mechanisms 117 to 120, that is, the waste liquid vacuum-aspirated from each of the cleaning tanks 203 is received and temporarily accumulated. In the vacuum bottle 301, the plurality of aspiration nozzles 302 and 303 and the single vacuum nozzle 304 described above are provided.

The aspiration nozzles 302 and 303 are cylindrical members that discharge the used cleaner, that is, the waste liquid aspirated from the reagent probe cleaning mechanisms 117 to 120 into the vacuum bottle 301, are fixed to a top wall of the vacuum bottle 301, and penetrate the top wall. The vacuum aspiration port 207 (Fig. 3) of each of the cleaning tanks 203 of the reagent probe cleaning mechanisms 117 and 119 belonging to the above-described first system is connected to the aspiration nozzle 302 through a first waste liquid aspiration system L1. The waste liquid aspiration system L1 includes a solenoid valve SV1 that opens and closes a flow path thereof. The vacuum aspiration port 207 (Fig. 3) of each of the cleaning tanks 203 of the reagent probe cleaning mechanisms 118 and 120 belonging to the above-described second system is connected to the aspiration nozzle 303 through a second waste liquid aspiration system L2. The waste liquid aspiration system L2 includes a solenoid valve SV2 that opens and closes a flow path thereof.

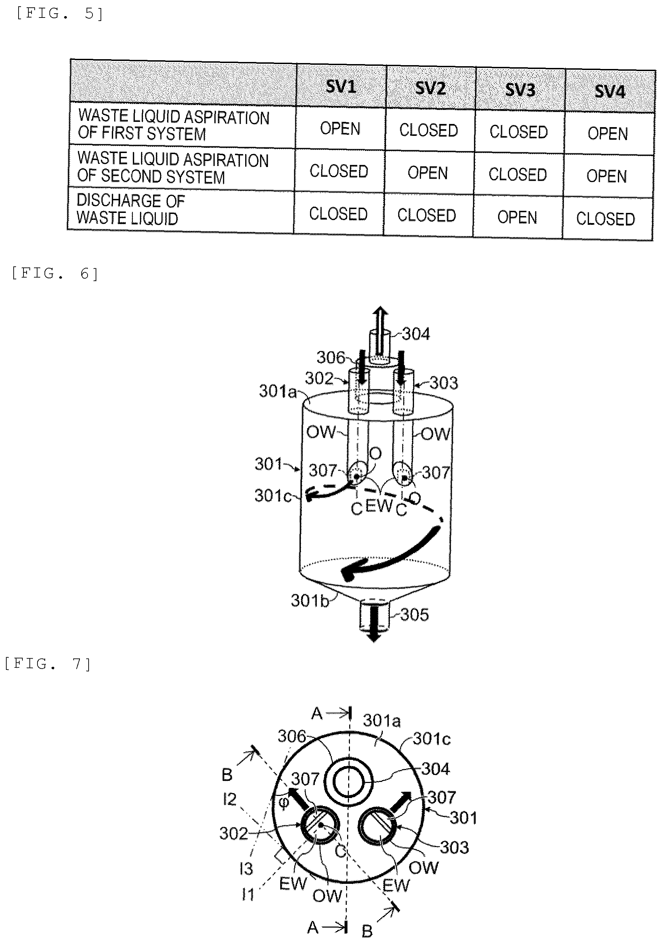

In addition, a waste liquid nozzle 305 (Fig. 6) for discharging the waste liquid accumulated in the vacuum bottle 301 is provided below the vacuum bottle 301. The above-described waste liquid tube 205 is connected to the waste liquid nozzle 305 through a pipe L3. The pipe L3 includes a solenoid valve SV3 that opens and closes a flow path thereof.

The vacuum tank 309 is connected to the vacuum nozzle 304 through a tube L4. As a result, the vacuum tank 309 is connected to the vacuum bottle 301. The vacuum pump 310 is connected to the vacuum tank 309, and the vacuum tank 309 is evacuated by the vacuum pump 310. The tube L4 includes a solenoid valve SV4 configured with, for example, a three-way valve (or a plurality of on-off valves). When the solenoid valve SV4 is closed, a flow path portion connected to the vacuum tank 309 of the tube L4 is closed, and an internal pressure of the vacuum tank 309 is maintained at a negative pressure as compared to the atmospheric pressure in a state where the vacuum pump 310 is driven. Simultaneously, a flow path portion connected to the vacuum bottle 301 of the tube L4 is exposed to the atmosphere. When the solenoid valve SV4 is opened, the tube L4 becomes a closed flow path, and the vacuum bottle 301 is connected to the vacuum tank 309 in the negative pressure. In order to suppress the inflow of the waste liquid from the vacuum bottle 301 into the vacuum tank 309, a buffer tank may be provided between the vacuum bottle 301 and the solenoid valve SV4 in the tube L4.

### -Control Operation of Cleaner Aspiration-

Fig. 5 is a table collectively illustrating the summary of an aspiration control operation of the cleaner (waste liquid) by the control device. As described above, in the automatic analyzer according to the present embodiment, the plurality of aspiration nozzles 302 and 303 are provided in the same vacuum bottle 301, and the solenoid valves SV1 and SV2 are provided in the waste liquid aspiration systems L1 and L2 of the aspiration nozzles 302 and 303, respectively. Not only the solenoid valves SV1 and SV2 but also the other solenoid valves SV3 and SV4 provided in the aspiration mechanism 300 are controlled by the control device 122. The control device 122 controls the solenoid valves such that a timing at which the cleaner is discharged from each of the aspiration nozzles 302 and 303 to the vacuum bottle 301 deviates from a timing at which the cleaner is discharged from another aspiration nozzle to the vacuum bottle 301. In the present embodiment, the two aspiration nozzles 302 and 303 are provided in the same vacuum bottle 301. Therefore, the solenoid valves SV1 and SV2 are controlled such that a timing at which the waste liquid is discharged from the aspiration nozzle 302 deviates from a timing at which the waste liquid is discharged from the aspiration nozzle 303.

In the table of Fig. 5, opening and closing states of the solenoid valves SV1 to SV4 for each situation are defined. This table is stored in, for example, a memory of the control device 122. The control device 122 controls the apparatus main body 100 based on a measurement content input from the operator through the input unit 125, and controls the opening and closing of the solenoid valves SV1 to SV4 depending on the situation in accordance with the table of Fig. 5.

In a situation where the waste liquid is aspirated in the first system, the control device 122 opens the solenoid valve SV1 of the first waste liquid aspiration system L1 in a state where the solenoid valves SV2 and SV3 are closed and the solenoid valve SV4 is opened. As a result, the cleaning tanks 203 of the reagent probe cleaning mechanisms 117 and 118 belonging to the first system are connected to the vacuum tank 309 through the vacuum bottle 301, the inside of the vacuum bottle 301 is at a negative pressure, and the waste liquid is aspirated from the cleaning tanks 203 of the reagent probe cleaning mechanisms 117 and 118 into the vacuum bottle 301.

In a situation where the waste liquid is aspirated in the second system, the control device 122 opens the solenoid valve SV2 of the second waste liquid aspiration system L2 in a state where the solenoid valves SV1 and SV3 are closed and the solenoid valve SV4 is opened. As a result, the cleaning tanks 203 of the reagent probe cleaning mechanisms 118 and 120 belonging to the second system are connected to the vacuum tank 309 through the vacuum bottle 301, the inside of the vacuum bottle 301 is at a negative pressure, and the waste liquid is aspirated from the cleaning tanks 203 of the reagent probe cleaning mechanisms 118 and 120 into the vacuum bottle 301.

In a situation where the waste liquid accumulated in the vacuum bottle 301 is discharged from the vacuum bottle 301, the control device 122 opens the solenoid valve SV3 of the pipe L3 connected to the waste liquid tube 205 in a state where the solenoid valves SV1, SV2, and SV4 are closed. As a result, the inside of the vacuum bottle 301 is at the atmospheric pressure, and the waste liquid is discharged from the vacuum bottle 301 into the waste liquid tube 205.

In the present embodiment, by controlling the opening and closing of the solenoid valves SV1 and SV2 in accordance with the table of Fig. 5, the situation where the waste liquid of the first system is aspirated and the situation where the waste liquid of the second system is aspirated do not temporally overlap each other. In addition, when the waste liquid is discharged from the vacuum bottle 301, the solenoid valve SV4 is closed. Therefore, the situation where the waste liquid is discharged does not temporally overlap the situation where the waste liquid of the first system is aspirated and the situation where the waste liquid of the second system is aspirated.

### -Vacuum Bottle-

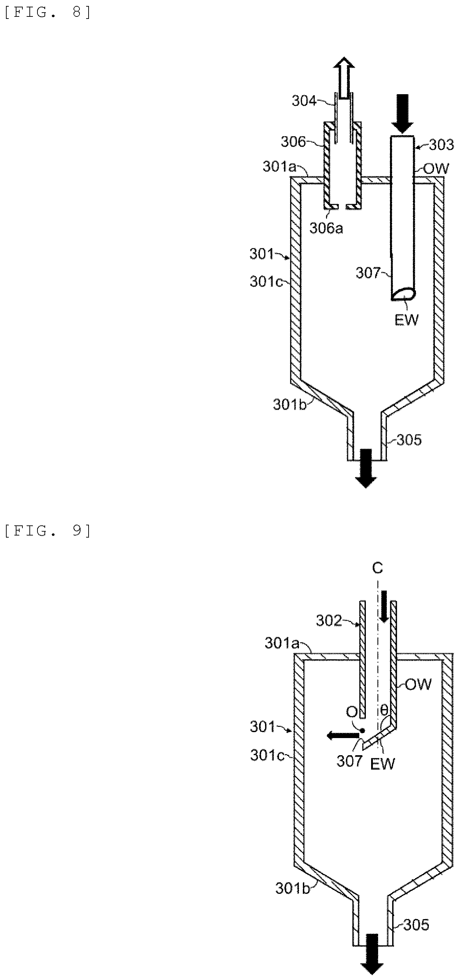

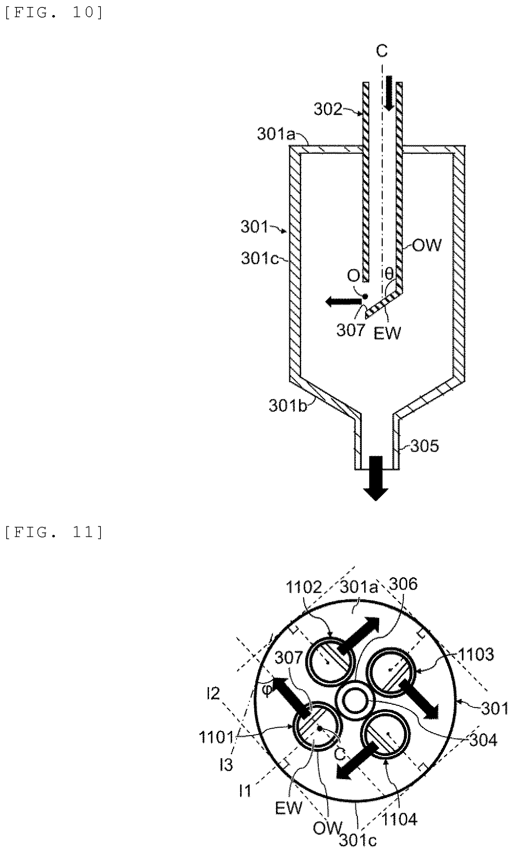

Fig. 6 is a perspective view illustrating the external appearance of the vacuum bottle 301, Fig. 7 is a top view, Fig. 8 is a cross-sectional view taken along line A-A in Fig. 7, and Figs. 9 and 10 are cross-sectional views taken along line B-B in Fig. 7. Regarding Figs. 9 and 10, Fig. 9 matches with Fig. 6 or the like, and Fig. 10 illustrates another configuration example. Although the shape is not necessarily limited, the vacuum bottle 301 illustrated in Figs. 6 and 7 is a cylindrical container of which a center line vertically extends in the present embodiment.

A top wall 301a (upper wall) of the vacuum bottle 301 is a circular plate, and the aspiration nozzles 302 and 303 and the vacuum nozzle 304 are attached to the top wall 301a. A bottom wall 301b (lower wall) of the vacuum bottle 301 is formed using a plate material in a conical shape (funnel shape) that is downwardly convex, and a bottom surface of an inner wall of the vacuum bottle 301 is a tapered surface that is downwardly inclined toward the center. In a lower end (apex position of the cone) of the bottom wall 301b, the waste liquid nozzle 305 is provided. The waste liquid nozzle 305 is connected to the waste liquid tube 205 through the pipe L3. The waste liquid flowing through the aspiration nozzles 302 and 303 is temporarily accumulated in the vacuum bottle 301, and is discharged from the waste liquid nozzle 305 when the solenoid valve SV3 (Fig. 4) is opened. Since the bottom wall 301b of the vacuum bottle has a funnel shape, the accumulation of the waste liquid in the vacuum bottle 301 is suppressed.

The vacuum nozzle 304 is attached to the top wall 301a of the vacuum bottle 301 through a small space (small chamber) 306. The small space 306 is a cylindrical member having a larger diameter than the vacuum nozzle 304, and penetrates the top wall 301a of the vacuum bottle 301. The protrusion amount of the small space 306 from the top wall 301a to the inner space of the vacuum bottle 301 is suppressed (is smaller than at least the protrusion amount of the aspiration nozzles 302 and 303), and the distance from the bottom wall 301b of the vacuum bottle 301 is ensured as much as possible. A lower end surface of the small space 306 is covered with an end wall 306a (Fig. 8) having a small hole at the center, and the waste liquid scattered in the vacuum bottle 301 is not likely to be aspirated into the small space 306.

### -Aspiration Nozzle-

The aspiration nozzles 302 and 303 penetrate the top wall 301a of the vacuum bottle 301 such that a tip thereof protrudes to the inner space of the vacuum bottle 301. In the present embodiment, the aspiration nozzles 302 and 303 vertically extend in the vacuum bottle 301, and lower ends (tips) of the aspiration nozzles 302 and 303 are positioned slightly above the center of the inner space of the vacuum bottle 301 in the vertical direction. Although not necessarily limited thereto, the aspiration nozzles 302 and 303 are straight tubes, that is, have a shape extending linearly from the viewpoint of suppressing the volume in the inner space of the vacuum bottle 301.

Each of the aspiration nozzles 302 and 303 has a lower end surface (in a typical straight tube, a portion corresponding to a tip opening) that faces downward and is blocked with an end wall EW, and includes a discharge port 307 that is formed sideways (toward an inner circumferential surface of a cylindrical side wall of the vacuum bottle 301) instead. As a result, in the vacuum bottle 301, the waste liquid is discharged sideways instead of downwardly from the aspiration nozzles 302 and 303 (thick arrow in Fig. 7).

In the present embodiment, the discharge port 307 is a notch that is provided on an outer circumferential wall OW of the aspiration nozzles 302 and 303. By blocking the lower end surface of the each of the straight tube-shaped aspiration nozzles 302 and 303 with the end wall EW and forming the discharge port 307 sideways instead, the distance between the inner wall surface of the vacuum bottle 301 and the aspiration nozzles 302 and 303, the height of the discharge port 307 in the vacuum bottle 301, or an opening direction of the discharge port 307 is set such that the waste liquid discharged from the aspiration nozzles 302 and 303 does not directly interfere with the bottom wall 301b of the vacuum bottle 301, that is, the waste liquid discharged from the aspiration nozzles 302 and 303 does not initially collide with the bottom wall 301b. The discharge port 307 is designed such that at least a projection in a waste liquid discharge (emission) direction (a thick arrow direction in Fig. 7) does not overlap the bottom wall 301b. Needless to say, each of the aspiration nozzles 302 and 303 is disposed not to overlap a discharge direction of the cleaner of another aspiration nozzle. Specifically, the aspiration nozzle 302 is disposed not to interfere with the waste liquid discharged from the aspiration nozzle 303, and the aspiration nozzle 303 is disposed not to interfere with the waste liquid discharged from the aspiration nozzle 302. In the present embodiment, for example, a configuration where the discharge ports 307 of the aspiration nozzles 302 and 303 are formed toward different directions in a circumferential direction of the vacuum bottle 301 is adopted as illustrated in Fig. 7.

In the present embodiment, the discharge port 307 is formed by cutting a lower end of the outer circumferential wall OW of each of the aspiration nozzles 302 and 303, and is positioned in the lower end of the outer circumferential wall OW of each of the aspiration nozzles 302 and 303, and a part of an opening edge is defined by the end wall EW. In addition, as described above, the lower ends of the aspiration nozzles 302 and 303 are positioned slightly above the center of the inner space of the vacuum bottle 301 in the vertical direction. Therefore, in the present embodiment, the discharge port 307 is positioned on the upper half side of the inside of the vacuum bottle 301 in the vacuum bottle 301. In the present embodiment, the discharge port 307 is disposed at a higher position than the designed maximum liquid level of the waste liquid in the vacuum bottle 301. The end wall EW is inclined downwardly toward the discharge port 307. Note that, as illustrated in Fig. 10, the discharge port 307 may be configured to be positioned on the lower half side of the inside of the vacuum bottle 301 in the vacuum bottle 301.

As illustrated in Fig. 9, in a cross-section taken along a plane passing through a center line C of the aspiration nozzles 302 and 303 and a center O of the discharge port 307, an angle θ (< 180°) between the outer circumferential wall OW (vertical wall surface) and the end wall EW of the aspiration nozzles 302 and 303 is an obtuse angle. In addition, the opening of the discharge port 307 is substantially parallel to the center line C.

In addition, the plane (corresponding to the line B-B of Fig. 7) passing through the center line C of each of the aspiration nozzles 302 and 303 and the center O of the discharge port 307 is inclined with respect to and intersects an inner circumferential surface of the vacuum bottle 301. That is, the line B-B is configured not to be the normal line of the outer circumferential surface of the vacuum bottle 301. In addition, it is preferable that, as illustrated in Fig. 7, in a plan view, the opening direction (thick arrow in the same drawing) of the discharge port 307 of the aspiration nozzles 302 and 303 is designed to be perpendicular to a straight line l1 connecting the center line C of the aspiration nozzle 302 and an outer circumferential wall 301c of the vacuum bottle 301 at a shortest distance (parallel to a tangent l2 passing through an intersection between the outer circumferential wall 301c of the vacuum bottle 301 and a straight line 13). In other words, the plane passing through the center line C of each of the aspiration nozzles 302 and 303 and the center O of the discharge port 307 is orthogonal to the straight line l1. These configurations are to avoid the waste liquid vigorously discharged from the aspiration nozzles 302 and 303 from being scattered due to front collision with the inner circumferential wall surface of the vacuum bottle 301.

It is preferable that an angle ϕ between the plane passing through the center line C and the center O and the inner circumferential surface of the vacuum bottle 301 is 45 degrees or less. The angle ϕ corresponds to an angle (< 90°) between a tangent l3 at an intersection between the inner circumferential surface of the vacuum bottle 301 and the line B-B and the line B-B. In Fig. 7, the angle ϕ is slightly more than 45°. For example, it is desirable to allow the aspiration nozzles 302 and 303 to approach the inner wall of the vacuum bottle 301 in the shortest distance direction (in the straight line l1 direction from the aspiration nozzle 302) such that the angle ϕ is less than that of the configuration of Fig. 7. When the vacuum bottle 301 is manufactured by assembling the top wall 301a to which the aspiration nozzles 302 and 303 and the like are attached into the cylindrical outer circumferential wall 301c, an appropriate distance is required between an outer edge of the top wall 301a and the aspiration nozzles 302 and 303 due to the circumstances of the manufacturing. However, when these restrictions are not present (for example, when additive manufacturing is applied), a configuration where the aspiration nozzles 302 and 303 are in contact with the inner wall surface of the vacuum bottle 301 may also be adopted. In this case, the waste liquid is discharged from the aspiration nozzles 302 and 303 along the inner circumferential surface of the vacuum bottle 301, and follows the inner circumferential surface of the vacuum bottle 301 immediately after being discharged from the aspiration nozzles 302 and 303.

With the above-described configuration, the waste liquid vigorously discharged from the discharge port 307 of the aspiration nozzle 302 or 303 collides with the inner circumferential surface of the outer circumferential wall 301c of the vacuum bottle 301. As described in Fig. 7, the waste liquid obliquely collides with the inner circumferential surface of the vacuum bottle 301. Therefore, as indicated by an arrow in Fig. 6, the waste liquid colliding with the inner circumferential surface of the vacuum bottle 301 flows down while circulating around the inner circumferential surface of the vacuum bottle 301 (that is, helically moves).

### -Comparative Example-

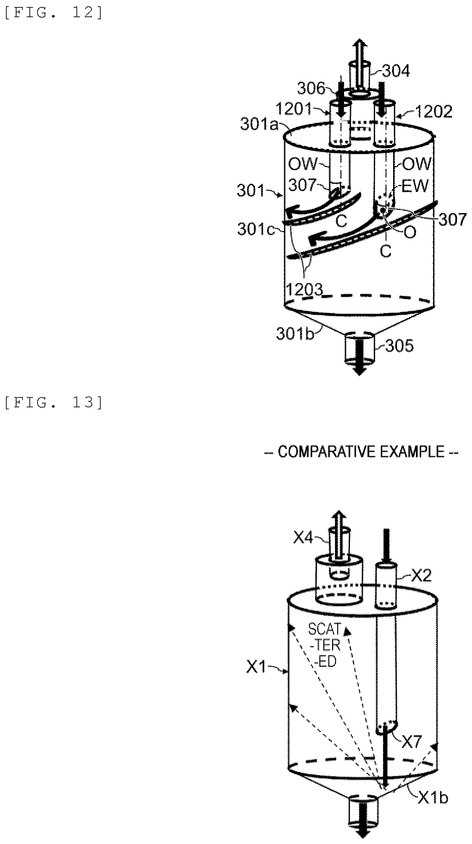

Fig. 13 is a perspective view illustrating the external appearance of a vacuum bottle according to Comparative Example. In the example of Fig. 13, an aspiration nozzle X2 is configured with a straight tube vertically extending, and a discharge port X7 is formed downwardly toward a lower end (tip) of the aspiration nozzle X2.

A large amount of waste liquid is aspirated into a vacuum bottle X1. In addition, in order to aspirate and remove the cleaner attached to the reagent probe or the like within a short period of time, the air volume relating to the aspiration of the cleaner needs to be increased. As a result, the cleaner is vigorously discharged from the aspiration nozzle X2 in the vacuum bottle X1, and directly collides with a side surface or a bottom wall X1b of the vacuum bottle X1 to be scattered in four directions in the vacuum bottle X1 as indicated by a dotted line arrow. When the scattered cleaner is attached to the periphery of a vacuum nozzle X4, the cleaner is aspirated into the vacuum nozzle X4 such that the cleaner flows into the vacuum tank. When the cleaner is accumulated in the vacuum tank, the aspiration capacity of the cleaner decreases due to a decrease in the performance of the vacuum tank, and the analysis performance of the automatic analyzer cannot be ensured.

In general, in the automatic analyzer, when the liquid level of the cleaner in the vacuum tank measured using the liquid level detection sensor provided in the vacuum tank reaches a certain value, the analysis operation is stopped. Therefore, it is important to suppress the scattering of the cleaner in the vacuum bottle. In Comparative Example of Fig. 13, for example, by enlarging the vacuum bottle X1 in a longitudinal direction to ensure the distance between the vacuum nozzle X4 and the bottom wall X1b, the inflow of the waste liquid into the vacuum tank can be suppressed. However, the vacuum bottle X1 is enlarged, which is disadvantageous in satisfying demands for miniaturization of the automatic analyzer. In addition, it is also considered to separate the inside of the vacuum bottle X1 into a plurality of chambers such that the waste liquid is not scattered to a chamber connected to the vacuum nozzle X4. However, by separating the inside of the vacuum bottle X1, a space where the waste liquid is accumulated is narrowed, and it is difficult to handle an increase in the processing speed of the automatic analyzer.

### -Effects-

(1) According to the present embodiment, the aspiration nozzles 302 and 303 vertically extend in the vacuum bottle 301, the lower end surface of each of the aspiration nozzles 302 and 303 facing downward is blocked with the end wall EW, and the discharge port 307 that is formed sideways is formed in the aspiration nozzles 302 and 303. By discharging the waste liquid sideways from the aspiration nozzles 302 and 303 in the vacuum bottle 301, the vigorous collision of the waste liquid with the bottom of the vacuum bottle 301 (the upper surface of the bottom wall 301b) can be suppressed, and the aspiration of the waste liquid scattered in the bottom of the vacuum bottle 301 into the vacuum tank 309 through the vacuum nozzle 304 can be suppressed. In addition, by blocking the lower end of the cylindrical member that vertically extends and providing a horizontal hole as the discharge port 307 to configure the aspiration nozzles 302 and 303, for example, as compared to a case where an aspiration nozzle having a shape where a cylindrical member is bent is adopted as the configuration where the waste liquid is discharged sideways in the vacuum bottle 301, the occupied volume of the aspiration nozzles 302 and 303 in the internal volume of the vacuum bottle 301 can be suppressed, and the volume of the vacuum bottle 301 where the waste liquid can be accumulated can be ensured while suppressing the enlargement of the vacuum bottle 301. In particular, in the present embodiment, the aspiration nozzles 302 and 303 are configured with a straight tube. Therefore, the occupied volume of the aspiration nozzles 302 and 303 can be suppressed as much as possible.
   As described above, according to the present embodiment, it is possible to suppress the inflow of the waste liquid from the vacuum bottle 301 into the vacuum tank 309 and to suppress the enlargement of the vacuum bottle 301 at the same time when the amount of the waste liquid increases. As a result, this configuration can contribute to the processing capacity of the automatic analyzer or the improvement of the analysis accuracy.
(2) The discharge port 307 is a notch that is provided on the outer circumferential wall OW of the aspiration nozzles 302 and 303. Therefore, the aspiration nozzles 302 and 303 can be manufactured by simply machining a pipe material. Note that a shape or a manufacturing method of the aspiration nozzles 302 and 303 is not particularly limited.
(3) In addition, the discharge port 307 as the notch is disposed in the lower end of the outer circumferential wall OW of the aspiration nozzles 302 and 303, a part of the discharge port 307 is defined by the end wall EW, and the end wall EW is inclined downwardly toward the discharge port 307. The angle θ between the end wall EW and the outer circumferential wall OW is an obtuse angle. As a result, the waste liquid in the aspiration nozzles 302 and 303 is guided by the end wall EW to be discharged from the aspiration nozzles 302 and 303, and the accumulation of the waste liquid in the aspiration nozzles 302 and 303 can be suppressed.
(4) The direction of the discharge port 307 is set such that the plane passing through the center line C of each of the aspiration nozzles 302 and 303 and the center O of the discharge port 307 is inclined with respect to and intersects the inner circumferential surface of the vacuum bottle 301. As a result, the waste liquid colliding with the inner circumferential surface of the vacuum bottle 301 is guided by the inner circumferential wall to be moved downward while helically circulating around the inner circumferential wall of the vacuum bottle 301. As a result, as compared to a case where the waste liquid is discharged downward from the aspiration nozzle X2 as illustrated in Fig. 13, the moving distance of the waste liquid until the contact with the bottom wall 301b of the vacuum bottle 301 increases, and the flow speed of the waste liquid during the contact with the bottom wall 301b of the vacuum bottle 301 decreases. Further, the waste liquid reaches the bottom wall 301b of the vacuum bottle 301 with a velocity component of the horizontal direction (obliquely comes into contact with the bottom wall 301b). As a result, the scattering of the waste liquid can be more reasonably suppressed. It is preferable that the angle ϕ between the plane passing through the center line C and the center O of the discharge port 307 and the inner circumferential surface of the vacuum bottle is 45 degrees or less. With this configuration, the waste liquid can smoothly follow the inner circumferential surface of the vacuum bottle 301, which is effective.
(5) In addition, in the present embodiment, the direction of each of the aspiration nozzles 302 and 303 is set such that the plane passing through the center line C and the center O of the discharge port 307 is orthogonal to the straight line l1 connecting the center line C and the inner circumferential surface of the vacuum bottle 301 by the shortest distance. As a result, the waste liquid can be discharged in the tangent l2 direction that passes through the intersection between the inner circumferential surface of the vacuum bottle 301 and the straight line l1 and is in contact with the inner circumferential surface of the vacuum bottle 301. This configuration is also effective for allowing the waste liquid to more smoothly follow the inner circumferential surface of the vacuum bottle 301. In this case, by allowing the aspiration nozzles 302 and 303 to approach the inner circumferential wall of the vacuum bottle 301 (for example, in Fig. 7, by allowing the aspiration nozzle 302 to approach the inner circumferential wall of the vacuum bottle 301 along the straight line l1), the angle ϕ is close to 0°, which is ideal.
   Note that a positional relationship of the aspiration nozzles 302 and 303 with the inner circumferential surface of the vacuum bottle 301 or a discharge direction of the waste liquid can be more appropriately designed and changed depending on the discharge speed or discharge amount of the waste liquid. For example, under a condition where the discharge speed of the waste liquid is slow, the position of the aspiration nozzles 302 and 303 or the direction of the discharge port 307 is appropriately set such that the waste liquid from the discharge port 307 collides with the inner circumferential surface of the vacuum bottle 301 in a short distance.
(6) The aspiration nozzles 302 and 303 are disposed such that the waste liquid discharge directions thereof do not overlap each other. Therefore, when the plurality of aspiration nozzles 302 and 303 are provided in the same vacuum bottle 301, the collision and scattering of the waste liquid with and in another aspiration nozzle can be suppressed. In particular, in the present embodiment, the discharge ports 307 of the aspiration nozzles 302 and 303 are formed toward different directions in the circumferential direction of the vacuum bottle 301. Therefore, the collision and scattering of the waste liquid with and in another aspiration nozzle can be more reasonably suppressed.
(7) In addition, when the discharge port 307 is positioned on the upper half side of the inside of the vacuum bottle 301 as illustrated in Fig. 9, the number of times of circulation of the waste liquid in the vacuum bottle 301 increases. Therefore, the waste liquid can reach the bottom wall 301b at a lower speed.
(8) In addition, when the cycle time of the automatic analyzer is long and the amount of the waste liquid is small, the aspiration nozzles 302 and 303 extend further downward as illustrated in Fig. 10A, and the discharge port 307 can also be positioned on the lower half side of the inside of the vacuum bottle 301. This way, the discharge of the waste liquid at a high position is avoided, and the waste liquid collides with the inner circumferential surface of the vacuum bottle 301 at a low position. As a result, the position where the waste liquid collides with the inner circumferential surface of the vacuum bottle 301 can be kept away from the vacuum nozzle 304.
(9) In addition, the control device 122 controls the solenoid valves SV1 and SV2 and the like such that the timings at which the waste liquid is discharged from the aspiration nozzles 302 and 303 in the vacuum bottle 301 deviate from each other. With this configuration, scattering caused by interference between the waste liquids discharged from the aspiration nozzles 302 and 303 can be suppressed. When the circulation directions of the waste liquids of the aspiration nozzles 302 and 303 are opposite to each other as illustrated in Fig. 7, assuming that the waste liquids are discharged from the aspiration nozzles 302 and 303 simultaneously, the waste liquids on the inner circumferential surface of the vacuum bottle 301 may collide with each other to be scattered. However, in the present embodiment, the timings at which the waste liquids are discharged from the aspiration nozzles 302 and 303 are controlled to deviate from each other. Therefore, irrespective of the discharge directions of the waste liquids of the aspiration nozzles 302 and 303, scattering caused by interference between the waste liquids discharged from the aspiration nozzles 302 and 303 can be suppressed.

### (Second Embodiment)

Fig. 11 is a top view of a vacuum bottle in an automatic analyzer according to a second embodiment of the present invention. Fig. 11 is a diagram corresponding to Fig. 7 of the first embodiment. In Fig. 11, elements the same as or corresponding to those of the first embodiment will be represented by the same reference numerals of Fig. 7, and the description thereof will be appropriately omitted.

The present embodiment is different from the first embodiment, in that the discharge ports 307 of a plurality of aspiration nozzles 1101 to 1104 are formed toward the same direction in the circumferential direction of the vacuum bottle 301. Different systems are connected to the aspiration nozzles 1101 to 1104. For example, the first system and the second system of the first embodiment are connected to the aspiration nozzles 1101 and 1102, respectively, the system of the specimen probe cleaning mechanisms 115 and 116 is connected to the aspiration nozzle 1103, and the system of the reaction container cleaning mechanism 121 is connected to the aspiration nozzle 1104. In the present embodiment, for example, the configuration where the four aspiration nozzles 1101 to 1104 are provided in the same vacuum bottle 301 is adopted. However, the number of the aspiration nozzles can be changed.

In the example of Fig. 11, the directions of the discharge ports 307 of the aspiration nozzles 1101 to 11014 are set such that all the waste liquids discharged from the aspiration nozzles 1101 to 1104 are circulated clockwise in a plan view. Circulation directions of the waste liquids discharged from the aspiration nozzles 1101 to 1104 may be uniformly the opposite direction (counterclockwise in a plan view). The other configurations are the same as those of the first embodiment.

According to the present embodiment, even when the waste liquids are simultaneously discharged from a plurality of aspiration nozzles among the aspiration nozzles 1101 to 1104, the waste liquids discharged from the plurality of nozzles do not collide with each other, and scattering caused by the interference between the waste liquids can be suppressed. In addition, by increasing the number of the plurality of systems connected to one vacuum bottle 301, miniaturization of the automatic analyzer caused by a reduction in the number of components can also be further expected.

For example, in a case where the number of systems connected to the same vacuum bottle 301 increases, when all of waste liquid discharge timings of the aspiration nozzles 1101 to 1104 are set not to temporally overlap each other, there is a concern that the processing capacity of the automatic analyzer may decrease due to an aspiration wait time of the waste liquid. In this case, it is necessary to allow the waste liquids to be simultaneously discharged from the plurality of aspiration nozzles, but the scattering of the waste liquids caused by the interference between the waste liquids is concerned. On the other hand, according to the present embodiment, even when the waste liquids are simultaneously discharged from the plurality of aspiration nozzles, the scattering of the waste liquids caused by the interference between the waste liquids can be suppressed.

### (Third Embodiment)

Fig. 12 is a perspective view illustrating the external appearance of a vacuum bottle in an automatic analyzer according to a third embodiment of the present invention. Fig. 12 is a diagram corresponding to Fig. 6 of the first embodiment. In Fig. 12, elements the same as or corresponding to those of the first embodiment will be represented by the same reference numerals of Fig. 6, and the description thereof will be appropriately omitted.

The present embodiment is different from the first embodiment, in that discharge ports 307 of a plurality of aspiration nozzles 1201 and 1202 have different heights in the vacuum bottle 301. Circulation directions of the waste liquids discharged from the aspiration nozzles 1201 and 1202 are the same. In addition, the present embodiment is different from the first embodiment, in that a guide 1203 that guides circulation of the cleaner is provided on the inner circumferential surface of the vacuum bottle 301. The guide 1203 is a protrusion that configures, for example, a part of a helical trajectory.

When the aspiration nozzles 1201 and 1202 approach each other without a sufficient gap, depending on the discharge direction of the waste liquid, for example, the waste liquid discharged from the aspiration nozzle 1202 may interfere with the aspiration nozzle 1201 to be scattered. On the other hand, as illustrated in Fig. 12, the discharge port 307 of the aspiration nozzle 1202 positioned on the rear side in the circulation direction of the waste liquid is lower than the discharge port 307 of the aspiration nozzle 1201 positioned on the front side in the circulation direction of the waste liquid. As a result, scattering caused by interference of the waste liquid discharged from the aspiration nozzle 1202 with the aspiration nozzle 1201 can be suppressed. A height difference between the discharge ports 307 of the aspiration nozzles 1201 and 1202 is set to be less than a distance in which the waste liquids discharged from the aspiration nozzles 1201 and 1202 fall while being circulated around the vacuum bottle 301 once.

In addition, the guide 1203 that guides the circulation flow of the waste liquid from the upper portion to the lower portion of the vacuum bottle 301 is provided. As a result, the flow of the waste liquid can be divided to further improve the scattering prevention effect.

The other points of the present embodiment are the same as those of the first embodiment.

### (Modification Example)

In the above-described embodiments, the vacuum bottle 301 into which the waste liquids of the reagent probe cleaning mechanisms 117 to 120 are aspirated has been described. However, as described above, the present invention is also applicable to a vacuum bottle into which the waste liquid of the specimen probe cleaning mechanisms 115 and 116 or the reaction container cleaning mechanism 121 is aspirated. In addition, the first to third embodiments can be appropriately combined.

In addition, the configuration of the vacuum bottle 301 described above can be appropriately designed and changed within a range not departing from the technical idea of the present invention. For example, Fig. 9 illustrates the configuration where the end wall EW of the aspiration nozzle 302 is bent with respect to the outer circumferential wall OW at the angle θ. However, a corner portion of the angle θ may have an R shape. In addition, in any of the embodiments, the configuration where the plurality of aspiration nozzles are connected to one vacuum bottle 301 is described, but only one aspiration nozzle may be connected to one vacuum bottle 301.

### Reference Signs List

106: reaction container
115, 116: specimen probe cleaning mechanism (cleaning mechanism)
117 to 120: reagent probe cleaning mechanism (cleaning mechanism)
121: reaction container cleaning mechanism (cleaning mechanism)
122: control device
202: reagent probe (probe)
301: vacuum bottle
302, 303: aspiration nozzle
307: discharge port
309: vacuum tank
310: vacuum pump
1101 to 1104: aspiration nozzle
1201, 1202: aspiration nozzle
1203: guide
C: center line
EW: end wall
l1: straight line
L1, L2: waste liquid aspiration system
O: center
OW: outer circumferential wall
SV1 to SV4: solenoid valve
θ, ϕ: angle

## Claims

1. An automatic analyzer comprising:
a vacuum bottle configured to receive a cleaner used in a cleaning mechanism;
a vacuum tank connected to the vacuum bottle;
a vacuum pump configured to evacuate the vacuum tank; and
a cylindrical aspiration nozzle configured to discharge the used cleaner aspirated from the cleaning mechanism into the vacuum bottle,
wherein the aspiration nozzle vertically extends in the vacuum bottle, has a lower end surface that faces downward and is blocked with an end wall, and includes a discharge port that is formed sideways.

2. The automatic analyzer according to claim 1,
wherein the discharge port is a notch that is provided on an outer circumferential wall of the aspiration nozzle.

3. The automatic analyzer according to claim 2,
wherein the discharge port is positioned at a lower end of the outer circumferential wall of the aspiration nozzle such that a part of the discharge port is defined by the end wall, and
the end wall is inclined downward toward the discharge port.

4. The automatic analyzer according to claim 3,
wherein an angle between the end wall and the outer circumferential wall of the aspiration nozzle is an obtuse angle.

5. The automatic analyzer according to claim 1,
wherein a plane passing through a center line of the aspiration nozzle and a center of the discharge port is inclined with respect to and intersects an inner circumferential surface of the vacuum bottle.

6. The automatic analyzer according to claim 5,
wherein an angle between the plane and the inner circumferential surface of the vacuum bottle is 45 degrees or less.

7. The automatic analyzer according to claim 5,
wherein the plane is orthogonal to a straight line connecting the center line of the aspiration nozzle and the inner circumferential surface of the vacuum bottle at a shortest distance.

8. The automatic analyzer according to claim 1,
wherein a plurality of the aspiration nozzles are provided in the vacuum bottle, and
each of the aspiration nozzles is disposed not to overlap a discharge direction of the cleaner of another aspiration nozzle.

9. The automatic analyzer according to claim 8,
wherein discharge ports of the plurality of aspiration nozzles are formed toward different directions in a circumferential direction of the vacuum bottle.

10. The automatic analyzer according to claim 8,
wherein discharge ports of the plurality of aspiration nozzles are formed toward the same direction in a circumferential direction of the vacuum bottle.

11. The automatic analyzer according to claim 8,
wherein discharge ports of the plurality of aspiration nozzles have different heights in the vacuum bottle.

12. The automatic analyzer according to claim 1,
wherein the discharge port is positioned on an upper half side of the inside of the vacuum bottle in the vacuum bottle.

13. The automatic analyzer according to claim 1,
wherein the discharge port is positioned on a lower half side of the inside of the vacuum bottle in the vacuum bottle.

14. The automatic analyzer according to claim 1,
wherein the cleaning mechanism is a device that cleans a probe or a reaction container with the cleaner.

15. The automatic analyzer according to claim 1,
wherein the aspiration nozzle is a straight tube.

16. The automatic analyzer according to claim 1,
wherein the vacuum bottle is cylindrical, and
a guide that guides circulation of the cleaner is provided on an inner circumferential surface of the vacuum bottle.

17. The automatic analyzer according to claim 1,
wherein a plurality of the aspiration nozzles are provided in the vacuum bottle,
the automatic analyzer further comprises
a plurality of solenoid valves provided in waste liquid aspiration systems of the plurality of aspiration nozzles, respectively, and
a control device configured to control the solenoid valves, and
the control device controls the plurality of solenoid valves such that a timing at which each of the aspiration nozzles discharges the cleaner deviates from a timing at which another aspiration nozzle discharges the cleaner.
